# EUROPÄISCHE PATENTSCHRIFT

(11) **EP 2 220 528 B1**
(45) Veröffentlichungstag und Bekanntmachung des Hinweises auf die Patenterteilung: **15.06.2011**
(21) Anmeldenummer: 08863952.1
(22) Anmeldetag: 20.11.2008
(51) Int. Cl.: G02B 6/38

(54) **LICHTWELLENLEITERVERTEILEREINRICHTUNG**
OPTICAL FIBRE DISTRIBUTOR DEVICE
DISPOSITIF RÉPARTITEUR DE FIBRES OPTIQUES

(30) Priorität: 20.12.2007 DE 202007017971 U
(43) Veröffentlichungstag der Anmeldung: 25.08.2010
(73) Patentinhaber: CCS Technology Inc., Wilmington, DE 19803 (US)
(72) Erfinder: SULLIVAN, Keith, Kent, TN11 9BH (GB); BRÜCHER, Luis, 13465 Berlin (DE)
(74) Vertreter: Sturm, Christoph
(86) Internationale Anmeldenummer: PCT/EP2008/009815
(87) Internationale Veröffentlichungsnummer: WO 2009/080163

(56) Entgegenhaltungen:
- WO-A-00/75706
- WO-A-2006/091850
- US-A- 5 363 465
- US-A- 5 937 130
- "Corning Produktkatalog: CCHE-Panels für Verteilerfeldgehäuse"[Online] Oktober 2007 (2007-10), XP007907233 Gefunden im Internet: URL:http://catalog2.corning.com/CorningCab leSystems/media/EMEA/Pdf_Catalog/pdf/Entre prise_Networks_FO/german/04_Anschlusskompo nenten/CCHE-Panels_Verteilerfeldgehaeuse_C CHE-CP.pdf> [gefunden am 2009-02-16]

## Beschreibung

Die Erfindung betrifft eine Lichtwetlenleiterverteilereinrichtung nach dem Oberbegriff des Anspruchs 1.

Aus dem Produktkatalog "Zubehör für LWL-Kabeinetze, Seite 227, Ausgabe 2, Corning Cable Systems GmbH & Co. KG, Jahr 2002" ist eine als LWL-Einschub ausgebildete Lichtwellenleiterverteilereinrichtung bekannt, deren Verteilerfeld eine Vorderwand mit der Vorderwand zugeordneten Anschlusseinrichtungen für Lichtwellenleiterstecker aufweist. Bei den Anschlusseinrichtungen kann es sich z. B. um Kupplungen für sogenannte ST-Lichtwellenleiterstecker oder FC-Lichtwellenleiterslecker oder SC-Lichtwellenteiterstecker handeln. Nach diesem Stand der Technik sind die Anschlusseinrichtungen der Vorderwand des Verteilerfelds derart zugeordnet, dass die Anschlusseinrichtungen zwei parallele Reihen aus jeweils mehreren Anschlusseinrichtungen bilden, wobei sich die Reihen jeweils in Längsrichtung der Vorderwand erstrecken. Längsrichtungen der Anschlusseinrichtungen verlaufen dabei parallel mit der Längsrichtung der Vorderwand.

Bei einer solchen Lichtweltenteiterverteilereinrichtung bereitet der Zugriff auf die mit den einzelnen Anschlusseinrichtungen zu kontaktierenden bzw. kontaktierten Lichtwellenleiterstecker Schwierigkeiten, insbesondere dann, wenn die Lichtwellenteiterstecker als sogenannte LC-Duplex-Lichtweitenleiterstecker ausgeführt sind.

Eine Lichtwellenleiterverteilereinrichtung mit den Merkmalen des Oberbegriffs des Anspruchs 1 ist aus der US 5,937,130 bekannt. Hinsichtlich weiteren Standes der Technik sei auf die WO 2006/091850 A1 und die WO 00/75706 A2 verwiesen.

Hiervon ausgehend liegt der vorliegenden Erfindung das Problem zu Grunde, eine neuartige Lichtwefienleiterverteilereinrichtung zu schaffen.

Dieses Problem wird durch eine Lichtwellenleiterverteilereinrichtung gemäß Anspruch 1 gelöst.

Durch die erfindungsgemäße, fischgrätartige Schrägstellung der Anschlusseinrichtungen gegenüber der Längsrichtung der Vorderwand wird ein erleichterter Zugriff auf mit den Anschlusseinrichtungen zu kontaktierende bzw. kontaktierte Lichtwellenleiterstecker ermöglicht.

Bevorzugte Weiterbildungen der Erfindung ergeben sich aus den Unteransprüchen und der nachfolgenden Beschreibung. Ein Ausführungsbeispiel wird anhand der Zeichnung näher erläutert. In der Zeichnung zeigt:
- Fig. 1: ein Verteilerfeld einer erfindungsgemäßen Lichtwellenleiterverteilerein- richtung in einer Ansicht auf die Vorderwand des Verteilerfelds; und
- Fig. 2: das Detail II des Verteilerfelds der Fig. 1.

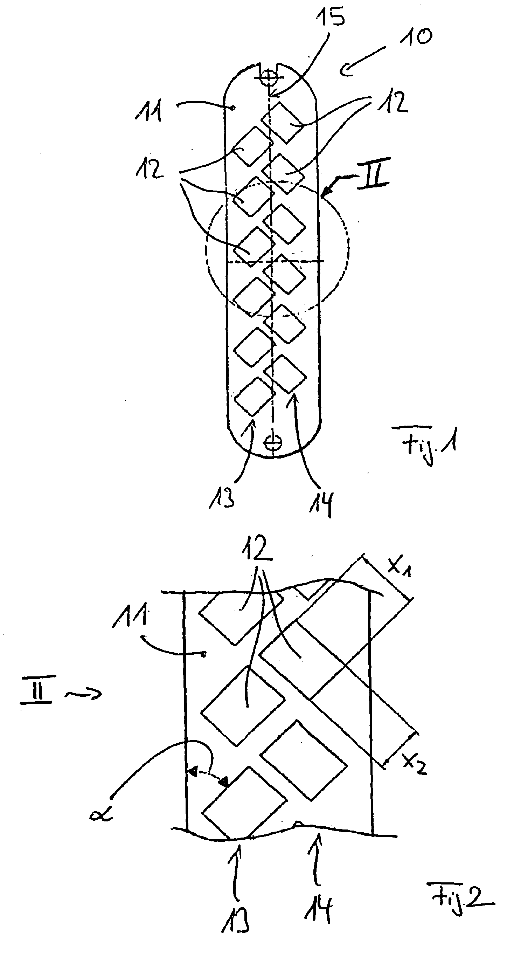

Die hier vorliegende Erfindung betrifft eine Lichtweitenleiterverteilereinrichtung mit einem Verteilerfeld. Fig. 1 zeigt eine schematisierte Ansicht auf ein Verteilerfeld 10 einer Lichtwellenleiterverteilereinrichtung im Bereich einer Vorderwand 11 des Verteilerfelds.

Der Vorderwand 11 des Verteilerfelds 10 sind mehrere Anschlusseinrichtungen 12 für Lichtwellenleiterstecker zugeordnet. Bei den Anschlusseinrichtungen 12 für die Lichtwellenleiterstecker handelt es sich um Buchsen bzw. Kupplungen.

Im Ausführungsbeispiel der Fig. 1 bilden die Anschlusseinrichtungen 12 für die Lichtwellenleiterstecker zwei Reihen 13, 14 aus mehreren Anschlusseinrichtungen 12 aus, wobei die Reihen 13, 14 sich im Wesentlichen in Längsrichtung der Vorderwand 11 erstrecken. Die Längsrichtung der Vorderwand 11 des Verteilerfelds 10 ist in Fig. 1 durch eine mit der Bezugsziffer 15 strichpunktierte Linie dargestellt.

Die Anschlusseinrichtungen 12 sind gemäß Fig. 2 durch zwei Maße gekennzeichnet, nämlich durch ein sich in Längsrichtung der Anschlusseinrichtungen 12 erstreckendes Maß x₁ und ein sich quer zur Längsrichtung der Anschlusseinrichtungen erstreckendes Maß x₂.

Im Sinne der hier vorliegenden Erfindung wird vorgeschlagen, dass die Anschlusseinrichtungen 12 gegenüber der Längsrichtung 15 der Vorderwand 11 schräggestellt sind, nämlich derart, dass die Längsrichtungen der Anschlusseinrichtungen 12 mit der Längsrichtung 15 der Vorderwand 11 einen Winkel einschließen.

Fig. 1 und 2 kann entnommen werden, dass in einer ersten Reihe 13 positionierte Anschlusseinrichtungen 12 gegenüber der Längsrichtung der Vorderwand 11 derart schräggestellt sind, dass die Längsrichtungen dieser Anschlusseinrichtungen 12 der ersten Reihe 13 mit der Längsrichtung 15 der Vorderwand 11 jeweils einen Winkel α einschließen. Dieser Winkel α beträgt vorzugsweise zwischen 30° und 60°, insbesondere beträgt der Winkel α in etwa 45°.

In der zweiten Reihe 14, die zur ersten Reihe 13 benachbart ist, positionierte Anschlusseinrichtungen 12 sind ebenfalls gegenüber der Längsrichtung 15 der Vorderwand 11 schräggestellt, und zwar derart, dass die Längsrichtungen der Anschlusseinrichtungen 12 der zweiten Reihe 14 mit den Längsrichtungen der Anschlusseinrichtungen 12 der ersten Reihe 13 in etwa einen rechten Winkel und demnach in etwa einen Winkel von 90° einschließen.

Hieraus folgt, dass die Anschlusseinrichtungen 12 der ersten Reihe 13 und die Anschlusseinrichtungen 12 der zweiten Reihe 14 fischgrätartig bzw. in Art eines Fischgrätmusters zueinander positioniert sind, wobei zwischen den Anschlusseinrichtungen 12 innerhalb einer Reihe 13 bzw. 14 und zwischen den Anschlusseinrichtungen 12 benachbarter Reihen jeweils ein Abstand eingehalten ist.

Bei den Anschlusseinrichtungen 12 handelt es sich insbesondere um solche zum Anschließen von LC-Duplex-Lichtwellenleitersteckern.

### Bezugszeichenliste

- 10: Verteilerfeld
- 11: Vorderwand
- 12: Anschlusseinrichtung
- 13: Reihe
- 14: Reihe
- 15: Längsrichtung

## Patentansprüche

1. Lichtwellenleiterverteilereinrichtung, mit einem Verteilerfeld (10), wobei das Verteilerfeld eine Vorderwand (11) mit der Vorderwand zugeordneten Anschlusseinrichtungen (12) für Lichtwellenleiterstecker aufweist, wobei die Anschlusseinrichtungen (12) mindestens zwei sich in Längsrichtung der Vorderwand erstreckende Reihen (13, 14) aus jeweils mehreren Anschlusseinrichtungen (12) bilden, und wobei die Anschlusseinrichtungen (12) gegenüber der Längsrichtung der Vorderwand (11) derart schräggestellt sind, dass die Längsrichtungen der Anschlusseinrichtungen (12) mit der Längsrichtung der Vorderwand (11) einen Winkel einschließen, **dadurch gekennzeichnet, dass** die Anschlusseinrichtungen (12) einer ersten Reihe (13) aus jeweils mehreren Anschlusseinrichtungen gegenüber der Längsrichtung der Vorderwand (11) derart schräggestellt sind, dass die Längsrichtungen dieser Anschlusseinrichtungen (12) mit der Längsrichtung der Vorderwand (11) jeweils einen ersten Winkel (α) einschließen, und dass die Anschlusseinrichtungen einer zweiten, zur ersten Reihe (13) benachbarten, parallel verlaufenden Reihe (14) aus jeweils mehreren Anschlusseinrichtungen gegenüber der Längsrichtung der Vorderwand (11) derart schräggestellt sind, dass die Längsrichtungen der Anschlusseinrichtungen der zweiten Reihe mit den Längsrichtungen der Anschlusseinrichtungen der ersten Reihe in etwa einen rechten Winkel einschließen, sodass die Anschlusseinrichtungen (12) der ersten Reihe (13) und der zweiten Reihe (14) fischgrätartig zueinander positioniert sind, wobei Längsseiten der Anschlusseinrichtungen (12) der ersten Reihe (13), die ein sich in Längsrichtung der Anschlusseinrichtungen erstreckendes Maß (x1) aufweisen, unter Einhaltung eines Abstands Schmalseiten der Anschlusseinrichtungen (12) der zweiten Reihe (14), die ein sich quer zur Längsrichtung der Anschlusseinrichtungen erstreckendes Maß (x2) aufweisen, gegenüberliegen, und wobei Schmalseiten der Anschlusseinrichtungen (12) der ersten Reihe (13), die das sich quer zur Längsrichtung erstreckende Maß (x2) aufweisen, unter Einhaltung eines Abstands Längsseiten der Anschlusseinrichtungen (12) der zweiten Reihe (14), die das sich in Längsrichtung erstreckende Maß (x1) aufweisen, gegenüberliegen.

2. Lichtwellenleiterverteilereinrichtung nach Anspruch 1, **dadurch gekennzeichnet, dass** der erste Winkel (α) zwischen 30° und 60° beträgt.

3. Lichtwellenleiterverteilereinrichtung nach Anspruch 1 oder 2, **dadurch gekennzeichnet, dass** dieselbe ausschließlich zwei Reihen (13, 14) mit Anschlusseinrichtungen (12) aufweist.

4. Lichtwellenleiterverteilereinrichtung nach einem der Ansprüche 1 bis 3, **dadurch gekennzeichnet, dass** die Anschlusseinrichtungen (12) dem Anschließen von LC-Duplex-Lichtwellenleitersteckern dienen.

## Claims

1. Optical waveguide distribution device, with a distribution panel (10), the distribution panel having a front wall (11) with connection devices (12), associated with the front wall, for optical waveguide plugs, the connection devices (12) forming at least two rows (13, 14) of in each case a plurality of connection devices (12), said rows extending in the longitudinal direction of the front wall, and the connection devices (12) being set at an angle with respect to the longitudinal direction of the front wall (11) in such a way that the longitudinal directions of the connection devices (12) enclose an angle with the longitudinal direction of the front wall (11), **characterized in that** the connection devices (12) in a first row (13) comprising in each case a plurality of connection devices are set at an angle with respect to the longitudinal direction of the front wall (11) in such a way that the longitudinal directions of these connection devices (12) enclose in each case a first angle (α) with the longitudinal direction of the front wall (11), and **in that** the connection devices in a second row (14) of in each case a plurality of connection devices, said row running in parallel with and adjacent to the first row (13), are set at an angle with respect to the longitudinal direction of the front wall (11) in such a way that the longitudinal directions of the connection devices in the second row enclose approximately a right angle with the longitudinal directions of the connection devices in the first row, with the result that the connection devices (12) in the first row (13) and in the second row (14) are positioned with respect to one another in the form of a fish bone, with longitudinal sides of the connection devices (12) in the first row (13), which longitudinal sides have a dimension (x1) extending in the longitudinal direction of the connection devices, being positioned opposite narrow sides of the connection devices (12) in the second row (14), which narrow sides have a dimension (x2) extending transversely with respect to the longitudinal direction of the connection devices, whilst maintaining a gap, and with narrow sides of the connection devices (12) in the first row (13), which narrow sides have the dimension (x2) extending transversely with respect to the longitudinal direction, being positioned opposite longitudinal sides of the connection devices (12) in the second row (14), which longitudinal sides have the dimension (x1) extending in the longitudinal direction, whilst maintaining a gap.

2. Optical waveguide distribution device according to Claim 1, **characterized in that** the first angle (α) is between 30° and 60°.

3. Optical waveguide distribution device according to Claim 1 or 2, **characterized in that** said optical waveguide distribution device has exclusively two rows (13, 14) with connection devices (12).

4. Optical waveguide distribution device according to one of Claims 1 to 3, **characterized in that** the connection devices (12) serve to connect LC duplex optical waveguide plugs.

## Revendications

1. Dispositif répartiteur de fibres optiques, avec une zone de répartition (10), dans lequel la zone de répartition présente une paroi avant (11) avec les dispositifs de raccordement (12) pour les connecteurs de fibres optiques associés à la paroi avant, dans lequel les dispositifs de raccordement (12) forment au moins deux rangées (13, 14) de plusieurs dispositifs de raccordement (12) respectifs s'étendant dans la direction longitudinale de la paroi avant, et dans lequel les dispositifs de raccordement (12) sont placés en biais par rapport à la direction longitudinale de la paroi avant (11) de telle sorte que les directions longitudinales des dispositifs de raccordement (12) forment un angle avec la direction longitudinale de la paroi avant (11), **caractérisé en ce que** les dispositifs de raccordement (12) d'une première rangée (13) de plusieurs dispositifs de raccordement respectifs sont placés en biais par rapport à la direction longitudinale de la paroi avant (11) de telle sorte que les directions longitudinales de ces dispositifs de raccordement (12) forment respectivement un premier angle (α) avec la direction longitudinale de la paroi avant (11), et **en ce que** les dispositifs de raccordement d'une deuxième rangée (14), parallèle voisine de la première rangée (13), de plusieurs dispositifs de raccordement respectifs sont placés en biais par rapport à la direction longitudinale de la paroi avant (11) de telle sorte que les directions longitudinales des dispositifs de raccordement de la deuxième rangée forment un angle approximativement droit avec les directions longitudinales des dispositifs de raccordement de la première rangée, de telle sorte que les dispositifs de raccordement (12) de la première rangée (13) et de la deuxième rangée (14) sont placés en arêtes de poisson les uns par rapport aux autres, dans lesquels les côtés longs des dispositifs de raccordement (12) de la première rangée (13), qui présentent une dimension (x1) dans la direction longitudinale des dispositifs de raccordement, se situent en face des côtés étroits des dispositifs de raccordement (12) de la deuxième rangée (14) tout en conservant un espacement, qui présentent une dimension (x2) transversalement à la direction longitudinale des dispositifs de raccordement, et dans lesquels les côtés étroits des dispositifs de raccordement (12) de la première rangée (13), qui présentent une dimension (x2) transversalement à la direction longitudinale, se situent en face des côtés longs des dispositifs de raccordement (12) de la deuxième rangée (14) tout en conservant un espacement, qui présentent une dimension (x1) dans la direction longitudinale.

2. Dispositif répartiteur de fibres optiques selon la revendication 1, **caractérisé en ce que** le premier angle (α) se situe entre 30° et 60°.

3. Dispositif répartiteur de fibres optiques selon la revendication 1 ou 2, **caractérisé en ce que** celui-ci présente exclusivement deux rangées (13, 14) avec des dispositifs de raccordement (12).

4. Dispositif répartiteur de fibres optiques selon une des revendications 1 à 3, **caractérisé en ce que** les dispositifs de raccordement (12) servent au raccordement de connecteurs de fibres optiques duplex LC.
